(19) Europäisches Patentamt
European Patent Office
Office européen des brevets

(11) **EP 4 502 020 A1**

(12) **EUROPEAN PATENT APPLICATION**
published in accordance with Art. 153(4) EPC

(43) Date of publication:
**05.02.2025 Bulletin 2025/06**

(21) Application number: **23778878.1**

(22) Date of filing: **08.02.2023**

(51) International Patent Classification (IPC):
***C08J 5/18*** *(2006.01)* ***C08G 65/40*** *(2006.01)*

(52) Cooperative Patent Classification (CPC):
**C08G 65/40; C08J 5/18**

(86) International application number:
**PCT/JP2023/004095**

(87) International publication number:
**WO 2023/188842 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.03.2022 JP 2022052718**
**07.07.2022 JP 2022109635**

(71) Applicant: **Toray Industries, Inc.**
**Tokyo 103-8666 (JP)**

(72) Inventors:
- **HIRANO, Taisuke**
  **Nagoya-shi, Aichi 455-8502 (JP)**
- **AKAHIRA, Masato**
  **Nagoya-shi, Aichi 455-8502 (JP)**
- **YAMAUCHI, Koji**
  **Nagoya-shi, Aichi 455-8502 (JP)**

(74) Representative: **Mewburn Ellis LLP**
**Aurora Building**
**Counterslip**
**Bristol BS1 6BX (GB)**

(54) **POLYETHER NITRILE FILM AND METHOD FOR PRODUCING POLYETHER NITRILE FILM**

(57) The purpose of the present invention is to provide a polyether nitrile film which has excellent processability and high heat resistance, and which exhibits excellent stretchability before being stretched, while having high crystallinity after being stretched. In order to achieve the above-described purpose, a polyether nitrile film according to the present invention has the following configuration. The present invention provides a polyether nitrile film which is a molded film formed from a polyether nitrile that contains N repeating units represented by formula (I) and M repeating units represented by formula (II), with N and M being integers that satisfy the relational expression $0.80 \leq (N/(N + M)) < 1.00$; and with respect to this polyether nitrile film, melting enthalpy is observed.

[Chem. 1]

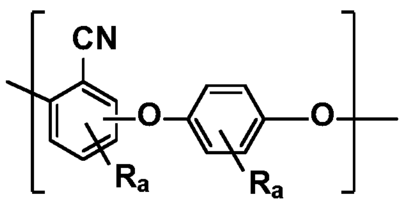
...(I)

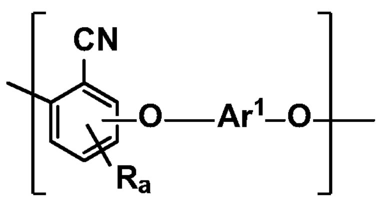
...(II)

EP 4 502 020 A1

## Description

### TECHNICAL FIELD

The present invention relates to a polyether nitrile film and a method for producing a polyether nitrile film.

### BACKGROUND ART

In electric devices, the reduction in size and thickness has been advanced, and flexible printed circuit boards have been required. In recent years, in addition to these, the wireless Internet and communication devices have been increased in speed, and often operated at high frequencies. Thus, circuit boards capable of high transmission speeds have been required. With such a situation, films for use in these devices are required to have heat resistance, low dielectric properties, and transparency.

In order to meet the requirement, films such as an aromatic polyester are conventionally used. Such films have, however, a problem in heat resistance, and hardly satisfy the requirement. Thus, films with higher heat resistance are required. For example, for soldering, heat resistance at 280°C or higher is required.

Polyether nitrile is a type of super engineering plastics that have excellent heat resistance, chemical resistance, and flame retardance, as well as excellent mechanical properties such as abrasion resistance and friction resistance. Stretched films of polyether nitrile have high heat resistance and mechanical properties (see, for example, Patent Document 1).

### PRIOR ART DOCUMENT

### PATENT DOCUMENT

Patent Document 1: Japanese Patent Laid-open Publication No. S61-154923

### SUMMARY OF THE INVENTION

### PROBLEMS TO BE SOLVED BY THE INVENTION

However, while the polymer presented in Patent Document 1 has the excellent properties as mentioned above, the polymer has a higher melting point than even other thermoplastic resins, and thus has a processing temperature increased for processing the polymer. In addition, the polymer presented in Patent Document 1 has high crystallinity, and thus has poor stretchability. Moreover, since the polymer presented in Patent Document 1 is crystallized during stretching and then defectively stretched, it is necessary to reduce the stretching speed, and the productivity is poor.

Accordingly, in view of these problems of the prior art, an object of the present invention is to provide a polyether nitrile film with excellent processability and high heat resistance, which exhibits excellent stretchability before being stretched and has high crystallinity after being stretched.

### SOLUTIONS TO THE PROBLEMS

Earnest studies of the present inventors have found that the above-mentioned object can be achieved with a polyether nitrile in which the polymer skeleton structure is controlled. More specifically, the present invention has the following configuration.

(1) A polyether nitrile film that is a molded film including a polyether nitrile including N repeating units represented by formula (I) and M repeating units represented by formula (II), with N and M being integers that satisfy the relational expression $0.80 \leq (N/(N + M)) < 1.00$, in which heat of fusion is observed.

[Chem. 1]

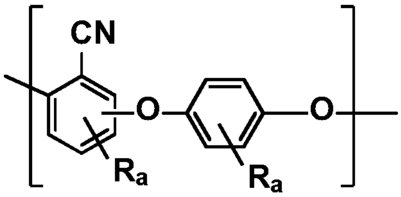 ...(I) 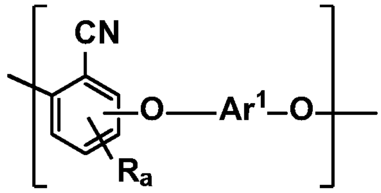 ...(II)

In the formula, $Ar^1$ has one skeleton selected from units represented by formulae (a) to (e), and X is any of a hydrogen atom, a methyl group, and a trifluoromethyl group. R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, R may be equal to or different from each other, and a represents the number of substituents of R, and is an integer of 0 to 4.

[Chem. 2]

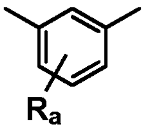 ...(a) 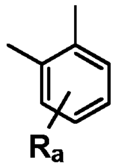 ...(b) 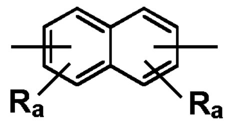 ...(c)

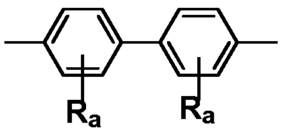 ...(d)

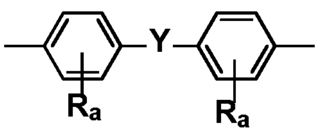 ...(e) 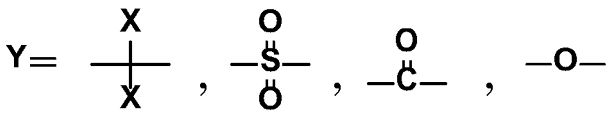

(2) The polyether nitrile film according to (1), where the polyether nitrile film has a melting point of 280 to 400°C.
(3) The polyether nitrile film according to (1) or (2), where the polyether nitrile film has a crystal orientation degree of 50% or more.
(4) The polyether nitrile film according to any one of (1) to (3), where the polyether nitrile film has a total light transmittance of 80% or more and a haze of 10% or less when the polyether nitrile film is 20 micrometers in thickness.
(5) The polyether nitrile film according to any one of (1) to (4), where the polyether nitrile film has a permittivity of 4.0 or less at a frequency of 5.8 GHz.
(6) A method for producing a polyether nitrile film, including the following steps (1) and (2):

Step (1) of melt-molding, at 310 to 400°C, a polyether nitrile that has N repeating units represented by the formula (I) and M repeating units represented by the formula (II), with N and M being integers that satisfy the relational expression of $0.80 \leq [N/(N + M)] < 1.00$.
Step (2) of cooling the molded body obtained in the step (1) to 180°C or lower.

[Chem. 3]

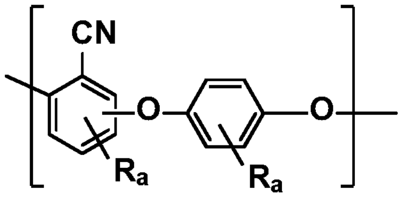 ...(I) 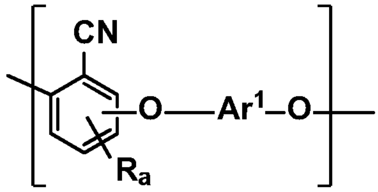 ...(II)

(In the formula, $Ar^1$ has one skeleton selected from units represented by formulae (a) to (e), and X is any of a hydrogen atom, a methyl group, and a trifluoromethyl group. R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, R may be equal to or different from each other, and a represents the number of substituents of R, and is an integer of 0 to 4.)

[Chem. 4]

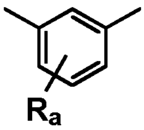 ...(a) 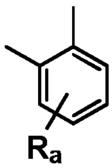 ...(b) 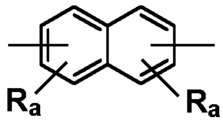 ...(c)

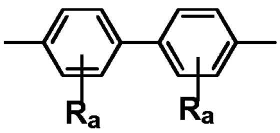 ...(d)

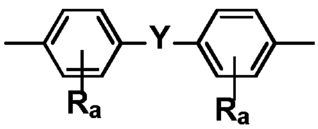 ...(e) Y= 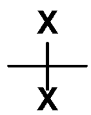 , 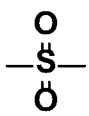 , 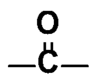 , —O—

(7) The method for producing a polyether nitrile film according to (6), further including the following steps (3) and (4):

Step (3) of stretching the molded body obtained in step (2) at 180 to 250°C.
Step (4) of heating the molded body obtained in step (3) at 220 to 320°C.

EFFECTS OF THE INVENTION

The present invention can provide a polyether nitrile film with excellent processability and high heat resistance, which exhibits excellent stretchability before being stretched and has high crystallinity after being stretched.

EMBODIMENTS OF THE INVENTION

Hereinafter, the present invention will be described in detail with reference to embodiments, but the present invention is not limited to these embodiments.

(1) Polyether Nitrile

According to the present invention, a polyether nitrile has N repeating units represented by formula (I) and M repeating units represented by formula (II), with N and M being integers that satisfy the relational expression $0.80 \leq (N/(N + M)) < 1.00$.

[Chem. 5]

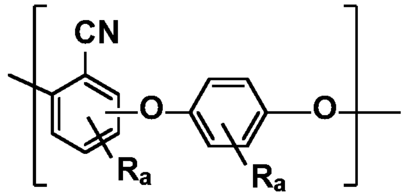 ...(I) 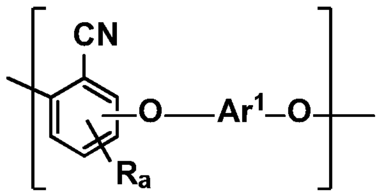 ...(II)

In the formula, $Ar^1$ has one skeleton selected from units represented by formulae (a) to (e), and X is any of a hydrogen atom, a methyl group, and a trifluoromethyl group. R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, R may be equal to or different from each other, and a represents the number of substituents of R, and is an integer of 0 to 4.

[Chem. 6]

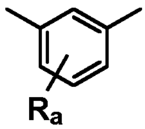 ...(a) 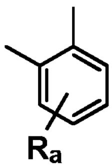 ...(b) 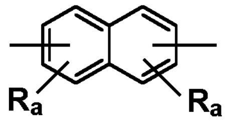 ...(c)

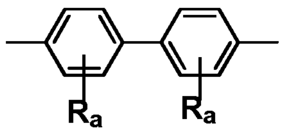 ...(d)

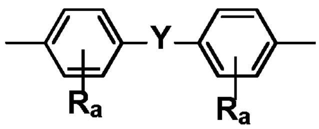 ...(e) Y= 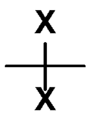 , 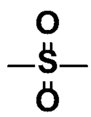 , 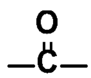 , —O—

According to the present invention, the polyether nitrile has, as described above, N repeating units represented by the formula (I) and M repeating units represented by the formula (II), with N and M being integers that satisfy the relational expression $0.80 \leq (N/(N + M)) < 1.00$. The upper limit of [N/(N + M)] is not particularly limited as long as the upper limit is less than 1.00, but is preferably 0.99 or less, more preferably 0.97 or less because the melting point is higher as the upper limit is closer to 1.00. The lower limit of [N/(N + M)] is not particularly limited as long as the lower limit is 0.80 or more, and the lower limit of less than 0.80 decreases the crystallinity to make the polyether nitrile amorphous, which is not suitable. From the viewpoint of crystallinity, N and M are preferably integers that satisfy the relational expression of $0.80 < [N/(N + M)] \leq 0.99$, more preferably integers that satisfy the relational expression of $0.85 \leq [N/(N + M)] \leq 0.97$, still more preferably integers that satisfy the relational expression of $0.90 \leq [N/(N + M)] \leq 0.97$.

The sum of N and M is not particularly limited, but can fall within the range of 5 to 10,000 as an example, and preferably fall within the range of 5 to 5000, more preferably within the range of 5 to 1000, still more preferably the range of 5 to 500.

a in each of the repeating units represented by the formula (I), the repeating units represented by the formula (II), and the units represented by the formula (a) to the formula (e) is preferably 0 in the polyether nitrile according to the present invention.

In the polyether nitrile according to the present invention, more preferably, the repeating units represented by the formula (I) are structural units represented by the following formula (III), and the structural units represented by the formula (II) are structural units represented by the following formula (IV).

[Chem. 7]

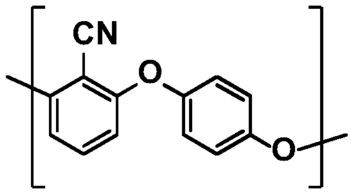 ...(III) 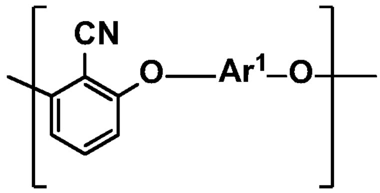 ...(IV)

In the formulas, $Ar^1$ has one skeleton selected from the units represented by the formulas (a) to (e), and a in each of the units represented by the formulas (a) to (e) is 0, and X is any of a hydrogen atom, a methyl group, and a trifluoromethyl group.

In the formula (IV), more preferably, $Ar^1$ has a skeleton represented by the formula (a), the formula (c), the formula (d), or the formula (e), and a in each of the formulas is 0, still more preferably, has a skeleton represented by the formula (d), and a in the formula (d) is 0.

The polyether nitrile according to the present invention is preferably a polymer with excellent stretchability. Since the stretchability is deteriorated with the small difference between the crystallization temperature in temperature rise from an amorphous state, that is, the cold crystallization temperature and the glass transition temperature, the difference is preferably large to some extent. Specifically, the difference between the cold crystallization temperature and the glass transition temperature is preferably 40 to 130°C. The difference of 40°C or more slows down the crystallization rate, thereby making the stretchability likely to be improved. In addition, the difference of 130°C or less makes the glass transition temperature and the melting point sufficiently different from each other, thereby making the crystallinity likely to be improved. The difference between the cold crystallization temperature and the glass transition temperature is more preferably 50 to 110°C.

The polyether nitrile according to the present invention is preferably a crystalline polymer with excellent processability. Thus, the difference between the crystallization temperature in temperature fall from a molten state, that is, the crystallization temperature at the time of temperature-fall and the melting point is preferably small to some extent, but if the difference is excessively small, the moldability is deteriorated. Specifically, the difference between the melting point and the crystallization temperature at the time of temperature-fall is preferably 40 to 100°C. The difference of 100°C or smaller makes the crystallinity more likely to be improved. In addition, the difference of 40°C or more slows down the solidification rate of the molten polymer, thereby making the processability likely to be improved. The difference between the melting point and the crystallization temperature at the time of temperature-fall is more preferably 50 to 90°C.

The melting point of the polyether nitrile according to the present invention is preferably 280 to 360°C from the viewpoint of processability, and more preferably 300 to 360°C from the viewpoint of mechanical properties.

The end group of the polyether nitrile according to the present invention is a hydroxyl group, a metal salt of a hydroxyl group, a halogeno group, a linear organic group having 1 to 16 carbon atoms, a branched organic group having 3 to 16 carbon atoms, and a cyclic organic group having 3 to 16 carbon atoms.

In the polyether nitrile according to the present invention, the structure of the end group may affect the thermal stability. The thermal stability of the polyether nitrile according to the present invention can be evaluated by thermogravimetric analysis (TG). In the thermogravimetric analysis (TG), the weight decrease ratio in the case of holding at 50°C for 1 minute under non-oxidizing atmosphere, then heating from 50°C to the melting point +30°C at a temperature rise rate of 10°C/min, and holding at the melting point +30°C for 30 minutes is preferably 5% or less, more preferably 4% or less, still more preferably 3% or less. It is to be noted that the weight decrease ratio is calculated based on the weight after holding at 50°C for 1 minute.

The end structure of the polyether nitrile according to the present invention can be quantified by nuclear magnetic resonance (NMR) analysis. The end of the polyether nitrile according to the present invention preferably satisfies the thermal stability mentioned above, and is more preferably a halogeno group or a cyclic organic group.

(2) Method for Producing Polyether Nitrile

The method for producing a polyether nitrile for use in the present invention is not particularly limited as long as a polyether nitrile that satisfies the requirement (1) can be synthesized, any production method can be employed, and for example, the polyether nitrile can be produced by heating an aromatic compound (M1) substituted with two hydroxyl groups, an aromatic compound (M2) substituted with two hydroxyl groups, which is different from the aromatic compound (M1), an aromatic compound (M3) having a benzonitrile skeleton substituted with two halogeno groups, and a mixture of bases in an organic polar solvent.

The aromatic compound (M1) substituted with two hydroxyl groups, the aromatic compound (M2) substituted with two hydroxyl groups, which is different from the aromatic compound (M1), the aromatic compound having a

benzonitrile skeleton substituted with two halogeno groups (M3), the bases, the organic polar solvent, and the reaction conditions, for use in a preferred embodiment of the present invention will be described below.

As the aromatic compound (M1) substituted with two hydroxyl groups in a preferred aspect of the method for producing a polyether nitrile according to the present invention, a compound represented by the following formula (k) can be given as an example. In addition, examples of the aromatic compound (M2) substituted with two hydroxyl groups can include compounds represented by the following formulas (1) to (p).

[Chem. 8]

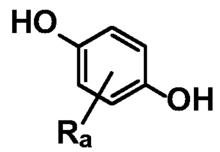 ...(k)

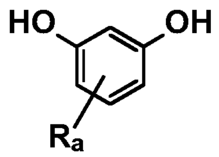 ...(l)

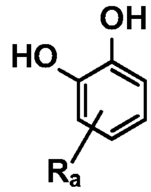 ...(m)

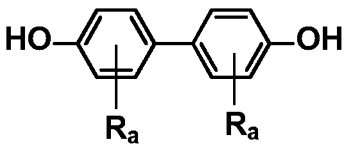 ...(n)

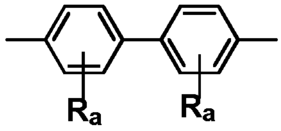 ...(o)

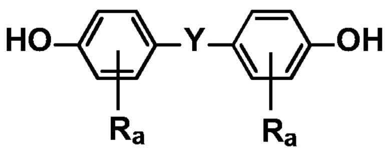 ...(p)

Y= 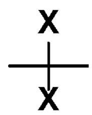 , 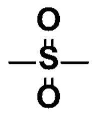 , 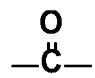 , 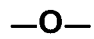

In the formulas (k) to (p), R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, a represents the number of substituents of R, and is an integer of 0 to 4. Further, in the case of a plurality of groups R, the groups R may be equal to or different from each other. X is any of a hydrogen atom, a methyl group, and a trifluoromethyl group.

Specific examples of the compound (M1) substituted with two hydroxyl groups include hydroquinone, methylhydroquinone, methoxyhydroquinone, 2,6-dimethylhydroquinone, 2,3-dimethylhydroquinone, trimethylhydroquinone, tetramethylhydroquinone, 2,5-di-tert-butylhydroquinone, 2,5-di-tert-amylhydroquinone, and 2-acetylhydroquinone. Among these examples, hydroquinone is preferable from the viewpoint of economic efficiency and physical properties.

Specific examples of the compound substituted with two hydroxyl groups (M2) include resorcinol, 5-methoxyresorcinol, 2-methylresorcinol, 5-methylresorcinol, 2,4-dihydroxybenzaldehyde, 4-ethylresorcinol, 3,5-dihydroxyacetophenone, 4-butylresorcinol, 2-acetylresorcinol, 4-hexylresorcinol, 4-acetylresorcinol, 3,5-dihydroxybenzoic acid, 4-benzoylresorcinol, 4,6-diacetylresorcinol, 2,6-dihydroxybenzoic acid, 2,4-dihydroxybenzoic acid, 4-propionylresorcinol, 3,5-dihydroxybenzamide, 3,5-dihydroxy-4-methylbenzoic acid, 2-nitroresorcinol, 2,6-dihydroxy-4-methylbenzoic acid, 2,4-dihydroxybenzamide, 1,4-dihydroxynaphthalene, catechol, 4,4'-dihydroxybiphenyl, 2,5-dihydroxybenzoic acid, phenylhydroquinone, 2,5-dihydroxyterephthalic acid, 1,4-dihydroxy-2-naphthoic acid, 3,6-dihydroxybenzonorbornane, 2,3-dihydroxynaphthalene, 1,2-dihydroxynaphthalene, 4-methylcatechol, 3-methoxycatechol, 3-methylcatechol, 3,4-dihydroxybenzaldehyde, 4-tert-butylcatechol, 2,3-dihydroxybenzaldehyde, 3,4-dihydroxyacetophenone, 3,4-dihydroxybenzophenone, 3,5-di-tert-butylcatechol, 3,4-dihydroxybenzoic acid, 4-nitrocatechol, 2,3-dihydroxybenzoic acid, catechol-4-acetic acid, 4,4'-dihydroxy-3,3',5,5'-tetramethylbiphenyl, 3,3'-dihydroxybenzidine, 1,5-dihydroxynaphthalene, 1,6-dihydroxynaphthalene, 2,6-dihydroxynaphthalene, 2,7-dihydroxynaphthalene, 2,2'-bis(4-hydroxyphenyl)propane, bis(4-hydroxyphenyl)sulfone, 1,1'-bis(4-hydroxyphenyl)methane, 4,4'-dihydroxybenzophenone, 4,4'-dihydroxydiphenyl ether, and 2,2-bis(4-hydroxyphenyl)hexafluoropropane. Among these examples, from the viewpoint of economic efficiency, resorcinol, catechol, 4,4'-dihydroxybiphenyl, 2,7-dihydroxynaphthalene, 2,2'-bis(4-hydroxyphenyl)propane, bis(4-hydroxyphenyl)sulfone, 1,1'-bis(4-hydroxyphenyl)methane, and 2,2-bis(4-hydroxyphenyl)hexafluoropropane are preferable, resorcinol, catechol, 4,4'-dihydroxybiphenyl, 2,2'-bis(4-hydroxyphenyl)propane, bis(4-hydroxyphenyl)sulfone, and 2,2-bis(4-hydroxyphenyl)hexafluoropropane are more preferable, and 4,4'-dihydroxybiphenyl is still more preferable.

In the polyether nitrile according to the present invention, the copolymer may have a random or block arrangement, but preferably has a random arrangement from the viewpoint of crystallinity. In addition, the compound (M1) substituted with two hydroxyl groups and the compound (M2) are preferably mixed in advance, and then allowed to react with each other.

In a preferred aspect of the method for producing a polyether nitrile according to the present invention, for example, a compound represented by the following formula (q) can be applied as the compound (M3) having a benzonitrile skeleton substituted with two halogeno groups.

[Chem. 9]

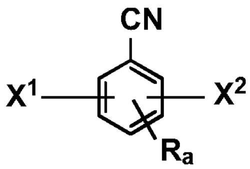

...(q)

In the formulas (q), R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, a represents the number of substituents of R, and is an integer of 0 to 3. $X^1$ and $X^2$ are each independently a halogen atom, and may be identical or different. In the case of a plurality of groups R, the groups R may be equal to or different from each other.

Specific examples of the compound (M3) having a benzonitrile skeleton substituted with two halogeno groups include 2,6-dichlorobenzonitrile, 2,6-difluorobenzonitrile, 2-chloro-6-fluorobenzonitrile, 2,5-dichlorobenzonitrile, 2-chloro-5-fluorobenzonitrile, 2,5-difluorobenzonitrile, 3,5-dichlorobenzonitrile, 3,5-difluorobenzonitrile, 2,3-dichlorobenzonitrile, 2,3-difluorobenzonitrile, 3-chloro-2-fluorobenzonitrile, 3,4-dichlorobenzonitrile, 3,4-difluorobenzonitrile, 4-chloro-3-fluorobenzonitrile, and 3-chloro-4-fluorobenzonitrile. Among these examples, from the viewpoint of economic efficiency, 2,6-dichlorobenzonitrile and 2,6-difluorobenzonitrile are preferable, and 2,6-dichlorobenzonitrile is more preferable.

In a preferred aspect of the method for producing a polyether nitrile according to the present invention, as for the amounts of the compounds (M1), (M2) and (M3) used, the sum of the compounds (M1) and (M2) preferably falls within the range of 0.90 to 1.10 mol, and from the viewpoint of polymer physical properties, preferably fall within the range of 0.95 to 1.05 mol, more preferably within the range of 0.95 to 1.00 mol, with respect to 1.00 mol of the compound (M3). The amounts of the compounds (M1) and (M2) used are not particularly limited as long as the compounds fall within ranges that satisfy the relational expression of $0.80 \leq$ [amount (mol) of (M1) used/total amount (mol) of (M1) and (M2) used] $< 1.00$, but from the viewpoint of polymer physical properties, $0.85 \leq$ [amount (mol) of (M1) used/total amount (mol) of (M1) and (M2) used] $<$ 1.00, more preferably $0.90 \leq$ [amount (mol) of (M1) used/total amount (mol) of (M1) and (M2) used] $< 1.00$.

In a preferred aspect of the method for producing a polyether nitrile according to the present invention, examples of the bases include organic bases and inorganic bases. Specific examples thereof include organic bases such as 1,8-diazabicyclo[5.4.0]-7-undecene, 1,5-diazabicyclo[4.3.0]-5-nonene, 7-methyl-1,5,7-triazabicyclo[4.4.0]deca-5-ene, and 1,5,7-triazabicyclo[4.4.0]deca-5-ene, alkali metal carbonates such as lithium carbonate, sodium carbonate, potassium carbonate, rubidium carbonate, and cesium carbonate, carbonates of alkali earth metals such as calcium carbonate, strontium carbonate, and barium carbonate, bicarbonates of alkali metals such as lithium hydrogen carbonate, sodium hydrogen carbonate, potassium hydrogen carbonate, rubidium hydrogen carbonate, and cesium hydrogen carbonate, bicarbonates of alkali earth metals such as calcium hydrogen carbonate, strontium hydrogen carbonate, and barium hydrogen carbonate, or hydroxides of alkali metals such as lithium hydroxide, sodium hydroxide, potassium hydroxide, rubidium hydroxide, and cesium hydroxide, and hydroxides of alkaline earth metals such as calcium hydroxide, strontium hydroxide, and barium hydroxide, and among these examples, from the viewpoint of ease of handling and reactivity, carbonates such as sodium carbonate and potassium carbonate, and bicarbonates such as sodium hydrogen carbonate and potassium hydrogen carbonate are preferable, sodium carbonate and potassium carbonate are more preferable, and sodium carbonate is still more preferably used. These may be used alone or in combination of two or more thereof without problems. In addition, these bases are preferably used in the form of an anhydride, but can also be used as a hydrate or an aqueous mixture. It is to be noted that the aqueous mixture herein refers to an aqueous solution, a mixture of an aqueous solution and a solid component, or a mixture of water and a solid component.

In a preferred aspect of the method for producing a polyether nitrile according to the present invention, the amount of the bases depends on the amount of the sum of the aromatic compound (M1) and the aromatic compound (M2). The molar ratio of the bases to the total number of moles of hydroxyl groups of the compounds (M1) and (M2) is at least 1.0,

and is preferably 1.2 or more from the viewpoint of reactivity. The upper limit of the bases in the present invention is not particularly limited, because the polyether nitrile can be produced without problems if the bases are excessively used, and thus the, but the practical upper limit is 100 with respect to the total number of moles of the hydroxyl groups of (M1) and (M2). Preferably, the molar ratio of the bases to the total number of moles of hydroxyl groups of (M1) and (M2) is 1.2 to 10.

In a preferred aspect of the method for producing a polyether nitrile according to the present invention, the organic polar solvent is not particularly limited as long as the reaction is not inhibited. Specific examples of such an organic polar solvent include nitrogen-containing polar solvents such as N-methyl-2-pyrrolidone (NMP), N-methylcaprolactam, N,N-dimethylformamide (DMF), N,N-dimethylacetamide (DMAc), 1,3-dimethyl-2-imidazolidinone (DMI), hexamethylphosphoramide, and tetramethylurea, sulfoxide/sulfone-based solvents such as dimethylsulfoxide (DMSO), dimethyl sulfone, diphenyl sulfone, and sulfolane, nitrile-based solvents such as benzonitrile, diaryl ethers such as diphenyl ether, ketones such as benzophenone and acetophenone, and mixtures thereof. These are all preferably used because of the high reaction stability, and among the examples, NMP, DMSO, and sulfolane are preferable, and NMP is particularly preferably used. These organic polar solvents are excellent in stability in a high temperature region, and can be said to be preferable organic polar solvents also from the viewpoint of availability.

As for the amount of the organic polar solvent, an example can be given in which the total amount of the organic solvent included in the mixture is preferably 0.50 liters or more, more preferably 1.00 liters or more, still more preferably 2.00 liters or more, with respect to 1.0 moles of the total benzene ring component included in the mixture. In addition, the upper limit of the amount of the organic polar solvent in the mixture is not particularly limited, but is preferably 100 liters or less, more preferably 50 liters or less, with respect to 1.0 moles of the total benzene ring component in the mixture. When the amount of the organic polar solvent used is increased, the solubility of the monomer and the oligomer in the production process is improved, thereby allowing the reactive end group to be efficiently introduced, but when the amount of the organic polar solvent used is excessively large, the amount of the crystalline polyether nitrile produced per unit volume of the reaction vessel tends to be decreased, and furthermore, the time required for the reaction tends to be prolonged. Accordingly, from the viewpoint of productivity, the organic polar solvent is preferably used in the range mentioned above. It is to be noted that the amount of the organic polar solvent herein is based on the volume of the solvent at normal temperature and normal pressure, and the amount of the organic polar solvent used in the mixture herein is the amount obtained by subtracting the amount of the organic polar solvent excluded to the outside of the reaction system by a dehydration operation or the like from the amount of the organic polar solvent introduced into the reaction system. In addition, the benzene ring component in the mixture herein is a benzene ring component included in raw materials that can be turned by the reaction into constituent components of repeating units in the polyether nitrile, and the "number of moles" of the benzene ring component in these raw materials represents the "number of benzene rings constituting the compounds".

In a preferred aspect of the method for producing a polyether nitrile according to the present invention, a molecular weight modifier can be added herein as necessary. As the molecular weight modifier, for example, a compound represented by the following formula (r), a compound represented by the following formula (s), or the like can be used.

[Chem. 10]

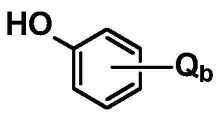
...(r)

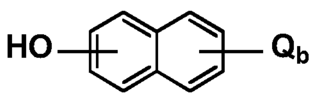
...(s)

In the formulas (r) and (s), Q is any of a linear organic group having 1 to 10 carbon atoms, a branched organic group having 3 to 10 carbon atoms, and a cyclic organic group having 3 to 10 carbon atoms, and may contain one or more of oxygen atoms, nitrogen atoms, or sulfur atoms. It is to be noted that Q may be equal to or different from each other. b represents the number of substituents of Q, and is an integer of 0 to 5. Specific examples thereof include phenol, 4-phenylphenol, 4-tertbutylphenol, 4-cumylphenol, 4-phenoxyphenol, 4-ethylphenol, 4-methoxyphenol, 4-tert-octylphenol, 1-naphthol, and 2-naphthol. Among these examples, 4-phenylphenol, 4-phenoxyphenol, 1-naphthol, and 2-naphthol are preferable from the viewpoint of manufacturability.

In a preferred aspect of the method for producing a polyether nitrile according to the present invention, by-product water is produced as the reaction proceeds. For the purpose of removing the by-product water, an organic compound that forms an azeotropic mixture with water can be added as necessary. Such an organic compound is not particularly limited as long as the compound forms an azeotropic mixture with water, but a nonpolar organic solvent with a boiling point lower than that of the reaction solvent is preferable, and specific examples thereof include toluene. The amount of the organic compound is not particularly limited as long as the organic compound does not inhibit the reaction, but preferably falls within the range of 0 to 50%, more preferably the range of 0 to 20%, still more preferably the range of 0 to 10% in terms of volume ratio with respect to the amount of the organic polar solvent.

A preferred aspect of the method for producing a polyether nitrile according to the present invention is carried out under heating under a nitrogen atmosphere or under reduced pressure. The reaction temperature can be varied over a wide range, but the aspect is performed at a temperature of at least 80°C, preferably at least 150°C, and is preferably carried out at a temperature of at most 400°C, and from the viewpoint of manufacturability, preferably carried out at a temperature of at most 350°C. In consideration of the sublimability and reactivity of compounds to be used, the aspect is preferably performed while gradually raising the temperature stepwise in the range of 150°C to 350°C, more preferably in the range of 150°C to 200°C. Furthermore, for the purpose of improving the reactivity, the aspect is more preferably performed the while stirring.

In a preferred aspect of the method for producing a polyether nitrile according to the present invention, the reaction time can vary widely depending on the reaction temperature, the nature of a reagent to be used, and the presence of the solvent to some extent, but is 0.1 hours to 100 hours, preferably 0.5 hours to 50 hours from the viewpoint of manufacturability.

In a preferred aspect of the method for producing polyether nitrile according to the present invention, the reaction vessel is not particularly limited as long as the reaction vessel is a vessel that can withstand the reaction temperature, and for example, a glass vessel, a stainless steel vessel, and the like can be used.

In a preferred aspect of the method for producing a polyether nitrile according to the present invention, the pressure applied to the reaction may be any pressure as long as the reactant can be kept a liquid phase in the reaction medium, a pressure in the range of 1 atm to 10 atm can be used, and the pressure is preferably a pressure of 1 atm to 2 atm from the viewpoint of manufacturability.

In a preferred aspect of the method for producing a polyether nitrile in the present invention, the polyether nitrile produced can be obtained by separating and collecting the polyether nitrile from the reaction mixture obtained by the production method described above. The reaction mixture obtained by the production method mentioned above includes at least the polyether nitrile, and may include therein unreacted raw materials, by-product salts, unreacted bases, and the like as other components. The method for collecting the polyether nitrile from such a reaction mixture is not particularly limited, and examples thereof can include a method of collecting the polyether nitrile by, as necessary, bringing the polyether nitrile into contact with a solvent that has solubility in the by-product salt under heating as necessary, and a method of removing the by-product salts or the unreacted organic bases under reduced pressure.

In the method of collecting the polyether nitrile by bringing the polyether nitrile into contact with a solvent that has solubility in the by-product salt under heating as necessary, the solvent to be used is typically a solvent with relatively high polarity. Preferred solvents vary depending on the types of the bases used or the by-product salts, and examples thereof include water, alcohols typified by methanol, ethanol, propanol, isopropanol, butanol, and hexanol, ketones typified by acetone and methyl ethyl ketone, acetic acid esters typified by ethyl acetate and butyl acetate, nitrogen-containing polar solvents such as N-methyl-2-pyrrolidone (NMP), N-methylcaprolactam, N,N-dimethylformamide (DMF), N,N-dimethylacetamide (DMAc), 1,3-dimethyl-2-imidazolidinone (DMI), hexamethylphosphoramide, and tetramethylurea, sulfoxide/-sulfone-based solvents such as dimethyl sulfoxide (DMSO), dimethyl sulfone, diphenyl sulfone, and sulfolane, and acids such as acetic acid, hydrochloric acid, sulfuric acid, and nitric acid. Among these examples, from the viewpoints of availability and economic efficiency, water, methanol, acetone, acetic acid, hydrochloric acid, sulfuric acid, and NMP are preferable, and water, acetic acid, hydrochloric acid, and NMP are more preferable.

The method of removing the by-product salts or the unreacted organic bases under reduced pressure, the reaction may be carried out in the range of 0.001 atm to 1 atm under heating, as necessary, after completion of the reaction.

The structure of the polyether nitrile according to the present invention can be confirmed by infrared spectroscopy or nuclear magnetic resonance spectroscopy.

(3) Method for Producing Polyether Nitrile Film

The method for producing a polyether nitrile film according to the present invention includes the following steps (1) and (2):

Step (1) of melt-molding, at 310 to 400°C, a polyether nitrile that has N repeating units represented by the formula (I) and M repeating units represented by the formula (II), with N and M being integers that satisfy the relational expression of $0.80 \leq [N/(N + M)] < 1.00$.

Step (2) of cooling the molded body obtained in the step (1) to 180°C or lower.

[Chem. 11]

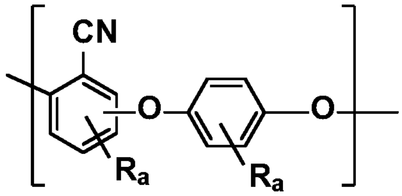 ...(I) 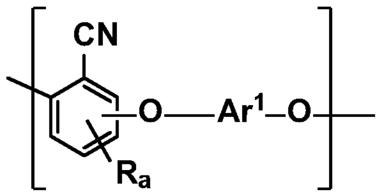 ...(II)

(In the formula, $Ar^1$ has one skeleton selected from units represented by formulae (a) to (e), and X is any of a hydrogen atom, a methyl group, and a trifluoromethyl group. R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, R may be equal to or different from each other, and a represents the number of substituents of R, and is an integer of 0 to 4.)

[Chem. 12]

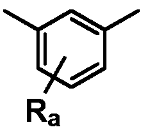 ...(a) 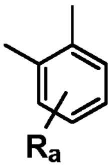 ...(b) 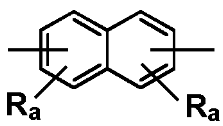 ...(c)

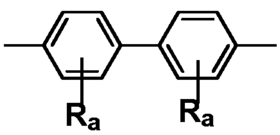 ...(d)

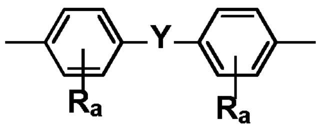 ...(e) Y= 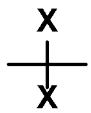 , 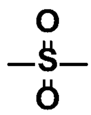 , 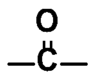 , —O—

The step (1) is a step of melt-molding, at 310 to 400°C, a polyether nitrile that has N repeating units represented by the formula (I) and M repeating units represented by the formula (II), with N and M being integers that satisfy the relational expression of $0.80 \leq [N/(N + M)] < 1.00$.

In the step (1), the polyether nitrile can be produced, for example, by the method described in the (2).

Next, the step of melt-molding the polyether nitrile in the step (1) at 310 to 400°C will be described. Specifically, first, the polyether nitrile is molded into a film. This step can be performed by applying a usual method, for example, a press molding method, an extrusion molding method, or the like. In this step, for bringing the polyether nitrile into a molten state, the polyether nitrile needs to be heated to the melting point or higher. The temperature is not particularly limited as long as the temperature is equal to or higher than melting point, but the temperature of higher than 450°C is not preferable because the processability is deteriorated, with deterioration due to oxidation. In addition, around the melting point, the film formability is poor and nonuniform, which is not preferable. A preferable processing temperature is the melting point plus 10°C to 80°C, specifically, 310°C to 400°C, preferably 320°C to 400°C, more preferably 340°C to 380°C.

Next, the step (2) of cooling the molded body obtained in the step (1) to 180°C or lower will be described. In this step, the molded film is cooled. The temperature at the time of cooling is not particularly limited as long as the temperature is equal to or lower than the glass transition temperature, the temperature around the glass transition temperature is not preferable because crystallization proceeds, thereby deteriorating the stretchability. The temperature at the time of cooling is preferably 180°C or lower, more preferably 150°C or lower.

The method for producing a polyether nitrile film according to the present invention preferably further includes the following steps (3) and (4):

Step (3) of stretching the molded body obtained in step (2) at 180 to 250°C.

Step (4) of heating the molded body obtained in step (3) at 220 to 320°C.

In the step (3), the molded body may be stretched by uniaxial stretching, simultaneous biaxial stretching, or sequential biaxial stretching. In any of the stretching methods, the stretching ratio is preferably 1.01 times or more, more preferably 1.5 times or more, still more preferably 2 times or more. More specifically, the length ratio in the stretching direction is more preferably 1.01 times or more in the case of uniaxial stretching, whereas the area ratio is more preferably 1.01 times or more in the case of simultaneous biaxial stretching and sequential biaxial stretching. The stretching ratio is 1.01 times or more, more preferably 1.5 times or more, still more preferably 2 times or more, thereby making a sufficient orientation likely to be achieved. The upper limit of the stretching ratio is not particularly limited, but is typically about 10 times.

The stretching temperature in the step (3) is 180°C to 250°C, preferably 200°C to 240°C for stretching at a temperature that is equal to or higher than the glass transition temperature and equal to or lower than the cold crystallization temperature.

In the method for producing a polyether nitrile film according to the present invention, the step (4) is a step of heating the molded body obtained in the step (3) at 220 to 320°C. Including such a step allows the stretched film to be subjected to heat setting and then stabilized. The heat setting can be performed for the film stretched at a temperature that is equal to or higher than the stretching temperature and equal to or lower than the melting point of the polymer. The heat setting temperature is 220°C to 320°C, preferably 240°C to 300°C, for heat setting at a temperature that is equal to or higher than the stretching temperature and equal to or lower than the melting point of the polymer. The time for heat setting is not setting particularly limited, but is preferably 1 second to 10 minutes.

The stretching speed is not particularly limited as long as the film can be stretched, but is preferably 10 mm/min or more from the viewpoint of productivity.

(4) Polyether Nitrile Film

A polyether nitrile film according to the present invention is a molded film including a polyether nitrile that has N repeating units represented by formula (I) and M repeating units represented by formula (II), with N and M being integers that satisfy the relational expression $0.80 \leq (N/(N + M)) < 1.00$, in which heat of fusion is observed.

[Chem. 13]

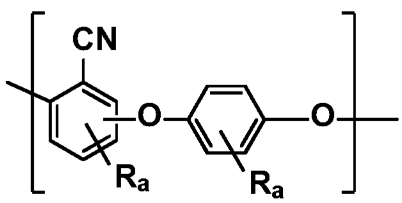 ...(I) 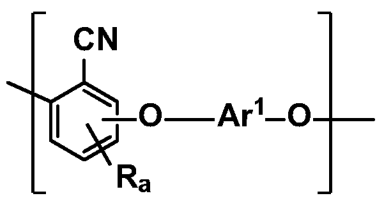 ...(II)

In the formula, $Ar^1$ has one skeleton selected from units represented by formulae (a) to (e), and X is any of a hydrogen atom, a methyl group, and a trifluoromethyl group. R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, R may be equal to or different from each other, and a represents the number of substituents of R, and is an integer of 0 to 4.

[Chem. 14]

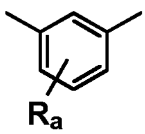 ...(a)

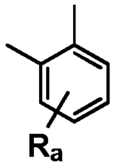 ...(b)

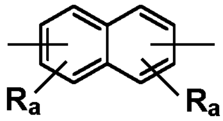 ...(c)

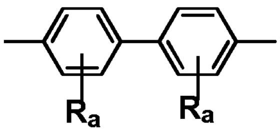 ...(d)

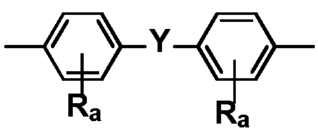 ...(e)

Y= 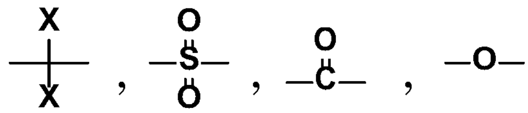

Preferred aspects and the like of the polyether nitrile in the polyether nitrile film according to the present invention are as described in the (1).

In the polyether nitrile film according to the present invention, heat of fusion is observed. In the present invention, the feature that "heat of fusion is observed" represents the fact that an endothermic peak derived from fusion is observed at the time of temperature rise in differential scanning calorimetry (DSC) measurement. The lower limit of the heat of fusion is not particularly limited as long as the heat of fusion is observed, and is, for example, 1 J/g. The upper limit of the heat of fusion is not particularly limited, but is, for example, 60 J/g because excessive heat of fusion may increase the crystallinity and decrease the stretchability.

Examples of the form of the polyether nitrile film according to the present invention include a melt-pressed film obtained by pressing in a molten state, an extrusion-molded film or extrusion-molded sheet obtained by extrusion molding, and a stretched film obtained by stretching.

The melt-pressed film or the extrusion-molded film can be subjected to a heat treatment after the molding to enhance the crystallinity and improve the mechanical properties. The temperature of the heat treatment is not particularly limited as long as the temperature is equal to or higher than the glass transition temperature and equal to or lower than the melting point, but is preferably 200 to 300°C, more preferably 250 to 300°C.

The polyether nitrile film according to the present invention is preferably a stretched film. The stretched film makes excellent transparency and dielectric properties likely to be achieved. In addition, the stretched film makes the heat resistance, chemical resistance, transparency, flame retardance, dielectric properties, and mechanical properties likely to be improved. In the present invention, the stretched film refers to a film whose crystal orientation degree can be observed by a wide angle X-ray diffraction method. The stretched film may be a uniaxially stretched film or a biaxially stretched film. In addition, the biaxially stretched film may be a biaxially simultaneously stretched film or a sequentially biaxially stretched film. For any of the stretched films, however, the stretching ratio is preferably 1.01 times or more, more preferably 1.5 times or more, still more preferably 2 times or more in the stretching. The upper limit of the stretching ratio is not particularly limited, but is typically about 10 times. Further, in the case of a biaxially stretched film, at least one of the two axes is preferably stretched within the above-mentioned range of the stretching ratio, and both of the two axes are more preferably stretched within the range of the stretching ratio.

The crystal orientation degree of the polyether nitrile film according to the present invention is preferably 50% or more, more preferably 70% or more, still more preferably 85% or more. In addition, the upper limit of the crystal orientation degree of the polyether nitrile film according to the present invention is not particularly limited, but is 100%. The crystal orientation degree is 50% or more, thereby making the chemical resistance likely to be improved. Examples of the method for the crystal orientation degree within the range mentioned above include a method in which a melt-pressed film or an extrusion-molded film is heat-treated after being molded, and a method in which a film is heat-treated after being stretched. The crystal orientation degree can be measured by a wide angle X-ray diffraction method as described in <Measurement of Crystal Orientation Degree> in examples described later.

The melting point of the polyether nitrile film according to the present invention is preferably higher from the viewpoint of heat resistance. Specifically, the melting point of the polyether nitrile film is preferably 280 to 400°C, more preferably 300 to 400°C, still more preferably 320 to 400°C. For example, when the polyether nitrile film is a stretched film, the crystallinity is improved by the orientation, and thus, the melting point may be improved more than that of the polyether

nitrile used for preparing the polyether nitrile film. In addition, for example, the melting point may be improved by heat-treating a melt-pressed film or an extrusion-molded film.

The polyether nitrile film according to the present invention preferably has a total light transmittance of 80% or more and a haze of 10% or less when the film is 20 micrometers in thickness. Typically, when the transparency is excellent, the film can be widely used for applications such as displays. In the present invention, the transparency is represented by the total light transmittance and the haze. The total light transmittance is preferably 80% or more, more preferably 85% or more. The transparency is increased as the total light transmittance is closer to 100%, and thus, the total light transmittance is less than 100%. In addition, the haze is preferably 10% or less, more preferably 5% or less. The transparency is increased as the haze is closer to 0%, and thus, the haze is larger than 0%. The total light transmittance and the haze can be measured with a spectral haze meter.

In the present invention, examples of the method for adjusting the total light transmittance of the polyether nitrile film to be 80% or more and the haze to 10% or less include a method of employing the polyether nitrile film as a stretched film.

In the polyether nitrile film according to the present invention, the permittivity at a frequency of 5.8 GHz is preferably 4.0 or less, more preferably 3.5 or less, still more preferably 3.0 or less. The film with the low permittivity, that is, the excellent dielectric properties can be used in a wide range of applications such as communication devices and circuit boards. The lower limit of the permittivity is not particularly limited, but is preferably smaller, and the permittivity is more preferably closer to 0.

In the present invention, examples of the method for adjusting the permittivity of the polyether nitrile film to 4.0 or less include a method of employing a polyether film as a stretched film.

In the polyether nitrile film according to the present invention, the dissipation tangent at a frequency of 5.8 GHz is preferably less than 0.008, more preferably 0.007 or less. The lower limit of the dissipation tangent is not particularly limited, but is preferably smaller, and preferably closer to 0. Examples of the method for the dissipation tangent within the range mentioned above include a method of employing a polyether film as a stretched film.

The polyether nitrile film according to the present invention has a nitrile group as a polar group, and may thus have excellent adhesiveness to a resin material other than the polyether nitrile or a different material. Examples of the resin material other than the polyether nitrile include polyamide, polyester, polyether imide, polyether ketone, polyether ether ketone, a liquid crystalline polymer, polyamide imide, polyimide, polyacetal, polycarbonate, polyarylate, polyphenylene sulfide, polyether sulfone, polysulfone, polyvinyl alcohol, a polyethylene-vinyl alcohol copolymer, polyurethane, a norbornene resin, and a fluororesin. Examples of the different material include fibrous reinforcement materials such as glass fibers, carbon fibers, cellulose nanofibers, and alumina fibers, and metal materials such as aluminum, silver, gold, and copper.

The polyether nitrile film according to the present invention has good mechanical properties, and thus also has excellent radiation resistance. Specifically, the polyether nitrile film according to the present invention preferably has a tensile elongation retention of 50 to 100% after being subjected to gamma irradiation. Further, the tensile elongation retention after being subjected to gamma irradiation is measured by the method described in <Evaluation of Radiation Resistance> described later.

Preferable applications of the polyether nitrile film according to the present invention include displays, electric/-electronic components, communication components, circuit board components, home/office electrical product components, optical device/precision machine related components, water area components, automobile/vehicle related components, aircraft/rocket/satellite components, power plant related components, and other industrial applications.

EXAMPLES

Hereinafter, the present invention will be specifically described with reference to examples. These examples are illustrative, but not restrictive.

<Confirmation of Structure>

The structure of the polyether nitrile film was confirmed with the use of nuclear magnetic resonance spectroscopy (NMR). For NMR, $^1$H-NMR measurement was performed in a mixed solvent of pentafluorophenol/deuterochloroform = 5/3 (volume ratio) with the use of JNM-ECZ-500R manufactured by JEOL Ltd., and [N/(N + M)] was calculated from the ratios of integrated values of the obtained spectra.

<Measurement of Melting Point, Heat of Fusion, and Difference between Cold Crystallization Temperature and Glass Transition Temperature>

The melting point and heat of fusion of the polyether nitrile and polyether nitrile film were measured by differential

scanning calorimetry (DSC). The DSC measurement was performed with the use of Q20 manufactured by TA Instruments. From the result of temperature rise from 50°C to 400°C at 10°C/min with the use of the cooled pressed film (3 to 10 mg), the melting point, the heat of fusion, and the difference between the cold crystallization temperature and the glass transition temperature were calculated.

<Measurement of Crystal Orientation Degree>

The crystal orientation degree of the polyether nitrile film was measured with the use of D8 DISCOVER μHR Hybrid manufactured by Bruker Corporation. The polyether nitrile film was cut into a width of 1 mm, and one sheet of the polyether nitrile film in the case of a pressed film, or ten sheets thereof stacked in the case of a stretched film was used a measurement sample. X-rays were made perpendicularly incident onto a cross section the film to measure the wide angle X-ray diffraction. For the main peak of the two-dimensional wide angle X-ray diffraction image obtained, the diffraction intensity was cut out in the circumferential direction to prepare an orientation profile. With the minimal value of the orientation profile as a baseline, the crystal orientation degree was calculated from the half-value width H of the profile on the baseline by the following formula:

$$\text{Crystal orientation degree} = [(180 - H)/180]*100$$

<Measurement of Total Light Transmittance and Haze>

The total light transmittance and haze of the polyether nitrile film were measured with the use of the polyether nitrile film of 20 micrometers in thickness and with the use of a spectral haze meter 300A of NIPPON DENSHOKU INDUSTRIES CO., LTD.

<Measurement of Permittivity and Dissipation Tangent>

The permittivity of the polyether nitrile film was measured at a frequency of 5.8 GHz with the use of a cavity resonator CP521 from Kanto Electronics Application & Development Inc. The polyether nitrile film (60 mm*60 mm) of 5 to 40 micrometers in thickness was rolled, put in a PTFE tube, and shrunk with heat to obtain a sample, and the permittivity and dissipation tangent of the sample were measured, with an empty PTFE tube as a reference.

<Adhesion Evaluation>

The adhesion of the polyether nitrile film was evaluated with the use of MX-500N and ZTA-500N from IMADA CO., LTD. On an aluminum foil, a pressed film of the polyether nitrile was prepared, and subjected to a 180-degree peeling test to calculate the peeling stress.

<Evaluation of Radiation Resistance>

The radiation resistance of the polyether nitrile film was evaluated by measuring the tensile elongation retention before and after irradiation with 1000 kGy gamma rays at 27°C with the use of the polyether nitrile film of 200 micrometers in thickness. The tensile elongation retention was measured with the use of MX-500N and ZTA-500N from IMADA CO., LTD. The tensile elongation retention was determined by the following formula with the tensile elongation before gamma irradiation as $A_0$ (%) and the tensile elongation after the gamma irradiation as $A_1$ (%).

$$\text{Tensile elongation retention (\%)} = (A_1/A_0) \times 100$$

<Preparation of Pressed Film>

The pressed film of the polyether nitrile was prepared with the use of a tabletop test press SA303 from TESTER SANGYO CO., LTD. The polyether nitrile was melted at 360 to 410°C, and then subjected to a heating press to prepare a pressed film of 0.2 mm in thickness.

<Preparation of Stretched Film >

The stretched film of the polyether nitrile was prepared with the use of an automatic biaxial stretcher IMC-11A9

from Imoto machinery Co., LTD. The stretched film was prepared with the use of the pressed film of 50 mm*50 mm in length and width at a stretching speed of 10 to 100 mm/min to 3 times*3 times at 220°C. The quality of the stretchability was determined to be "stretchability: OK" if the film was successfully stretched without being torn in the case of stretching the film at a stretching speed of 10 mm/min, or "stretchability: NG" if the film was torn and thus failed to be stretched.

<Raw Materials used in Reference Examples>

Aromatic compound substituted with two hydroxyl groups (M1)
(M1-1) Hydroquinone (FUJIFILM Wako Pure Chemical Corporation)
Aromatic compound substituted with two hydroxyl groups (M2)
(M2-1) Resorcinol (FUJIFILM Wako Pure Chemical Corporation)
(M2-2) 4,4'-Dihydroxybiphenyl (Tokyo Chemical Industry Co., Ltd.)
(M2-3) 2,2-Bis(4-hydroxyphenyl)propane (Tokyo Chemical Industry Co., Ltd.)
(M2-4) Catechol (Tokyo Chemical Industry Co., Ltd.)
(M2-5) 2,2-Bis(4-hydroxyphenyl)hexafluoropropane (Tokyo Chemical Industry Co., Ltd.)
Compound having benzonitrile skeleton substituted with two halogeno groups (M3)
(M3-1) 2,6-Dichlorobenzonitrile (Tokyo Chemical Industry Co., Ltd.)

Base

(B-1) Sodium carbonate (KANTO CHEMICAL CO., INC.) Organic polar solvent
(S-1) NMP (FUJIFILM Wako Pure Chemical Corporation) Molecular weight modifier
(A-1) 4-Phenylphenol (KANTO CHEMICAL CO.,INC.)

[Reference Example 1]

In a 300 mL separable flask equipped with a stirrer, a nitrogen introducing tube and a Dean-Stark tube, 8.37 g (76.0 mmol) of hydroquinone as the aromatic compound (M1), 0.44 g (4.0 mmol) of resorcinol as the aromatic compound (M2), 13.93 g (81.0 mmol) of 2,6-dichlorobenzonitrile as the compound having a benzonitrile skeleton (M3), and 9.33 g (88.0 mmol) of sodium carbonate as a base were prepared, with 80 mL of NMP and 3 mL of toluene added thereto under a nitrogen atmosphere, and allowed to react at 160°C for 0.5 hours, and then at 200°C for 5 hours. After completion of the reaction, the reaction solution was cooled to room temperature, and 80 mL of NMP and 600 mL of water were added thereto. The obtained solid was further washed with 600 mL of warm water (80°C) to obtain 14.0 g of a white solid. As a result of NMR measurement, a peak (for one proton) derived from the resorcinol was observed at 7.16 ppm, and a peak (for four protons) derived from the hydroquinone was observed at 7.41 ppm, and [N/(N + M)] was calculated from the ratios of the respective integrated values.

[Reference Example 2]

Except that the amount of the hydroquinone used was 7.93 g (72.0 mmol) and that the amount of the resorcinol used was 0.88 g (8.0 mmol), the same operations as in Reference Example 1 were performed to obtain 14.1 g of a white solid.

[Reference Example 3]

Except that the amount of the hydroquinone used was 7.71 g (70.0 mmol) and that 1.86 g (10 mmol) of 4,4'-dihydroxybiphenyl was used as the aromatic compound (M2), the same operations as in Reference Example 1 were performed to obtain 14.8 g of a white solid. As a result of NMR measurement, a peak (for four protons) derived from the 4,4'-dihydroxybiphenyl was observed at 7.76-7-79 ppm, and a peak (for four protons) derived from the hydroquinone was observed at 7.41 ppm, and [N/(N + M)] was calculated from the ratios of the respective integrated values.

[Reference Example 4]

Except that the amount of the hydroquinone used was 8.15 g (74.0 mmol) and that 1.12 g (6.0 mmol) of 4,4'-dihydroxybiphenyl was used as the aromatic compound (M2), the same operations as in Reference Example 1 were performed to obtain 14.7 g of a white solid.

[Reference Example 5]

Except that 0.91 g (4.0 mmol) of 2,2-bis(4-hydroxyphenyl)propane was used as the aromatic compound (M2), the same operations as in Reference Example 1 were performed to obtain 15.0 g of a white solid. As a result of NMR measurement, a peak (for six protons) derived from the 2,2-bis(4-hydroxyphenyl)propane was observed at 1.90 ppm, and a peak (for four protons) derived from the hydroquinone was observed at 7.41 ppm, and [N/(N + M)] was calculated from the ratios of the respective integrated values.

[Reference Example 6]

Except that 0.44 g (4.0 mmol) of catechol was used as the aromatic compound (M2), the same operations as in Reference Example 1 were performed to obtain 13.9 g of a white solid. As a result of NMR measurement, a peak (for two protons) derived from the catechol was observed at 7.50-7.54 ppm, and a peak (for four protons) derived from the hydroquinone was observed at 7.41 ppm, and [N/(N + M)] was calculated from the ratios of the respective integrated values.

[Reference Example 7]

In a 300 mL separable flask equipped with a stirrer, a nitrogen introducing tube and a Dean-Stark tube, 7.93 g (72.0 mmol) of hydroquinone as the aromatic compound (M1), 1.49 g (8.0 mmol) of 4,4'-dihydroxybiphenyl as the aromatic compound (M2), 0.10 g (0.6 mmol) of 4-phenylphenol as a molecular weight modifier, 13.93 g (81.0 mmol) of 2,6-dichlorobenzonitrile as the compound having a benzonitrile skeleton (M3), and 9.33 g (88.0 mmol) of sodium carbonate as a base were prepared, with 80 mL of NMP and 3 mL of toluene added thereto under a nitrogen atmosphere, and allowed to react at 160°C for 0.5 hours, and then at 200°C for 5 hours. After completion of the reaction, the reaction solution was cooled to room temperature, and 80 mL of NMP and 600 mL of water were added thereto. The obtained solid was further washed with 600 mL of warm water (80°C) to obtain 14.7 g of a white solid. As a result of NMR measurement, a peak (for four protons) derived from the 4,4'-dihydroxybiphenyl was observed at 7.76-7-79 ppm, and a peak (for four protons) derived from the hydroquinone was observed at 7.41 ppm, and [N/(N + M)] was calculated from the ratios of the respective integrated values.

[Reference Example 8]

Except that 1.34 g (4.0 mmol) of 2,2-bis(4-hydroxyphenyl)hexafluoropropane was used as the aromatic compound (M2), the same operations as in Reference Example 1 were performed to obtain 15.2 g of a white solid. As a result of NMR measurement, a peak (for four protons) derived from the hydroquinone was observed at 7.41 ppm, and a peak (for four protons) derived from the 2,2-bis(4-hydroxyphenyl)hexafluoropropane was observed at 7.66 ppm, and [N/(N + M)] was calculated from the ratios of the respective integrated values.

[Reference Example 9]

In a 300 mL separable flask equipped with a stirrer, a nitrogen introducing tube and a Dean-Stark tube, 8.81g (80.0 mmol) of hydroquinone, 13.93 g (81.0 mmol) of 2,6-dichlorobenzonitrile, and 9.33 g (88.0 mmol) of sodium carbonate were prepared, with 80 mL of NMP and 3 mL of toluene added thereto under a nitrogen atmosphere, and allowed to react at 160°C for 0.5 hours, and then at 200°C for 5 hours. After completion of the reaction, the reaction solution was cooled to room temperature, and 80 mL of NMP and 600 mL of water were added thereto. The obtained solid was further washed with 600 mL of warm water (80°C) to obtain 14.0 g of a white solid.

[Reference Example 10]

Except that the amount of the hydroquinone used was 6.61 g (60.0 mmol) and that the amount of the resorcinol used was 2.20 g (20.0 mmol), the same operations as in Reference Example 1 were performed to obtain 13.7 g of a white solid.

[Example 1]

After vacuum-drying the polyether nitrile obtained in Reference Example 1 at 80°C for 12 hours, a pressed film thereof was prepared at 360°C, and cooled at 20°C to obtain a pressed film of 0.2 mm in thickness and 50 mm in both length and width. As a result of measuring the melting point and heat of fusion of the obtained pressed film, the melting point was 345°C, and the heat of fusion was 38 J/g. In addition, the difference between the cold crystallization temperature and the glass transition temperature was 74°C. The peeling stress on aluminum was 12 N.

[Example 2]

After preparing a pressed film in the same manner as in Example 1, the film was heat-treated at 250°C for 30 minutes to prepare a heat-treated pressed film. As a result of measuring the melting point and heat of fusion of the obtained heat-treated pressed film, the melting point was 351°C, and the heat of fusion was 48 J/g. The tensile elongation of the heat-treated pressed film obtained was 30%. After the heat-treated pressed film was irradiated with gamma rays with a total dose of 1000 kGy, the tensile elongation was 30%, and the tensile elongation retention was 100%.

[Examples 3 to 9]

In the same manner as in Example 1, pressed films were prepared with the use of the polyether nitriles obtained in Reference Examples 2 to 8.

[Comparative Example 1]

After vacuum-drying the polyether nitrile obtained in Reference Example 9 at 80°C for 12 hours, a pressed film thereof was prepared at 410°C, and cooled at 20°C to obtain a pressed film of 0.2 mm in thickness and 50 mm in both length and width.

[Comparative Example 2]

In the same manner as in Example 1, a pressed film was prepared with the use of the polyether nitrile obtained in Reference Example 10.

[Example 10]

With the use of the pressed film obtained in Example 1, the film was subjected to simultaneous biaxial stretching at a stretching temperature of 220°C, a stretching speed of 100 mm/min, and a stretching ratio of three times in both the length and width directions, and then subjected to heat setting at 250°C for 1 minute. The crystal orientation degree of the obtained film was 89%.

[Examples 11 to 17]

With the use of the pressed films obtained in Examples 3 to 9, the pressed films were stretched in the same manner as in Example 10.

[Comparative Example 3]

With the use of the pressed film obtained in Comparative Example 1, simultaneous biaxial stretching was attempted at a stretching temperature of 220°C, a stretching speed of 10 mm/min, and a stretching ratio of three times in both the length and width directions, but the film was torn, and thus failed to be stretched.

[Comparative Example 4]

With the use of the pressed film obtained in Comparative Example 2, simultaneous biaxial stretching was attempted at a stretching temperature of 220°C, a stretching speed of 10 mm/min, and a stretching ratio of three times in both the length and width directions, but the film was torn, and thus failed to be stretched.

[Table 1-1]

| | Example 10 | Example 11 | Example 12 | Example 13 | Example 14 |
|---|---|---|---|---|---|
| Polymer | Reference Example 1 | Reference Example 2 | Reference Example 3 | Reference Example 4 | Reference Example 5 |
| M1 | M1-1 | M1-1 | M1-1 | M1-1 | M1-1 |
| M2 | M2-1 | M2-1 | M2-2 | M2-2 | M2-3 |
| M3 | M3-1 | M3-1 | M3-1 | M3-1 | M3-1 |
| M1/M2 (molar ratio) | 95/5 | 90/10 | 87.5/12.5 | 92.5/7.5 | 95/5 |
| Base | B-1 | B-1 | B-1 | B-1 | B-1 |
| Solvent | S-1 | S-1 | S-1 | S-1 | S-1 |
| Molecular weight modifier | - | - | - | - | - |
| [N/(N+M)] | 0.96 | 0.90 | 0.88 | 0.92 | 0.91 |
| Melting point | 355°C | 347°C | 330°C | 350°C | 346°C |
| Heat of fusion | 28J/g | 23J/g | 23J/g | 28J/g | 20J/g |
| Pressed film used | Example 1 | Example 3 | Example 4 | Example 5 | Example 6 |
| Melting point of pressed film | 345°C | 337°C | 329°C | 342°C | 339°C |
| Heat of fusion of pressed film | 38J/g | 13J/g | 10J/g | 16J/g | 10J/g |
| Stretching speed | 100 mm/min | 100 mm/min | 100 mm/min | 100 mm/min | 100 mm/min |
| Stretching ratio | 3 times* 3 times | 3 times* 3 times | 3 times* 3 times | 3 times* 3 times | 3 times* 3 times |
| Stretchability | OK | OK | OK | OK | OK |
| Total light transmittance | 830 | 85% | 87% | 87% | 84% |
| Haze | 4.9% | 2.30 | 1.0% | 0.6% | 6.5% |
| Permittivity (5.8 GHz) | 2.0 | 2.2 | 2.3 | 2.1 | 3.0 |
| Dissipation tangent (5.8 GHz) | 0.003 | 0.004 | 0.005 | 0.003 | 0.005 |
| Crystal orientation degree | 890 | - | - | 90% | - |

[Table 1-2]

| | Example 15 | Example 16 | Example 17 | Comparative Example 3 | Comparative Example 4 |
|---|---|---|---|---|---|
| Polymer | Reference Example 6 | Reference Example 7 | Reference Example 8 | Reference Example 9 | Reference Example 10 |
| M1 | M1-1 | M1-1 | M1-1 | M1-1 | M1-1 |
| M2 | M2-4 | M2-2 | M2-5 | | M2-1 |
| M3 | M3-1 | M3-1 | M3-1 | M3-1 | M3-1 |
| M1/M2 (molar ratio) | 95/5 | 90/10 | 95/5 | 100/0 | 75/25 |
| Base | B-1 | B-1 | B-1 | B-1 | B-1 |
| Solvent | S-1 | S-1 | S-1 | S-1 | S-1 |

(continued)

| | Example 15 | Example 16 | Example 17 | Comparative Example 3 | Comparative Example 4 |
|---|---|---|---|---|---|
| Polymer | Reference Example 6 | Reference Example 7 | Reference Example 8 | Reference Example 9 | Reference Example 10 |
| Molecular weight modifier | - | A-1 | - | - | - |
| [N/(N+M)] | 0.94 | 0.90 | 0.94 | 1.00 | 0.75 |
| Melting point | 353°C | 342°C | 290°C | N.D. | N.D. |
| Heat of fusion | 32J/g | 24J/g | 40J/g | N.D. | N.D. |
| Pressed film used | Example 7 | Example 8 | Example 9 | Comparative Example 1 | Comparative Example 2 |
| Melting point of pressed film | 343°C | 336°C | 280°C | 388°C | N.D. |
| Heat of fusion of pressed film | 30J/g | 18J/g | 20J/g | 40J/g | N.D. |
| Stretching speed | 100 mm/min | 100 mm/min | 100 mm/min | 10 mm/min | 10 mm/min |
| Stretching ratio | 3 times* 3 times | 3 times* 3 times | 3 times* 3 times | 3 times* 3 times | 3 times* 3 times |
| Stretchability | OK | OK | OK | NG | NG |
| Total light transmittance | 820 | 87% | - | N.D. | N.D. |
| Haze | 6.20 | 0.3% | - | N.D. | N.D. |
| Permittivity (5.8 GHz) | 2.5 | 1.9 | 2.4 | N.D. | N.D. |
| Dissipation tangent (5.8 GHz) | 0.004 | 0.004 | 0.005 | N.D. | N.D. |
| Crystal orientation degree | - | - | - | N.D. | N.D. |

From the results of Examples 10 to 17, the amounts of the aromatic compounds (M1) and (M2) used within a range that satisfies the relational expression of 0.80 ≤ [amount (mol) of (M1) used/total amount (mol) of (M1) and (M2) used] < 1.00 caused [N/(N + M)] to fall within the range of 0.80 ≤ [N/(N + M)] < 1.00, the pressed film was stretchable with the melting point of 350°C or lower and the heat of fusion of 10 J/g or more, and the total light transmittance of the stretched film obtained was 80% or more, the haze thereof was 10% or less, the permittivity thereof at a frequency of 5.8 GHz was 3.5 or less, and the crystal orientation degree thereof was 89%. In contrast, in Comparative Example 1, the polyether nitrile obtained in Reference Example 9 has a high melting point of 388°C, and fails to be prepared at 360°C as in Example 1, the pressed film needs to be prepared at 410°C, and the processability is poor. In addition, from the results of Comparative Examples 3 and 4,the range of [N/(N + M)] outside the range mentioned above made stretching impossible, thereby failing to obtain any stretched film, and thus, the melting point or the heat of fusion was not observed.

## Claims

1. A polyether nitrile film that is a molded film including a polyether nitrile including N repeating units represented by formula (I) and M repeating units represented by formula (II), with N and M being integers that satisfy the relational expression 0.80 ≤ (N/(N + M)) < 1.00, wherein heat of fusion is observed.

[Chem. 1]

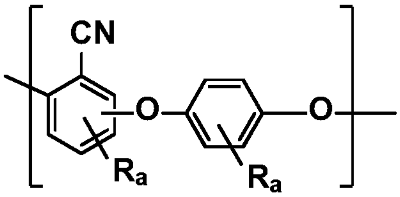 ...(I) 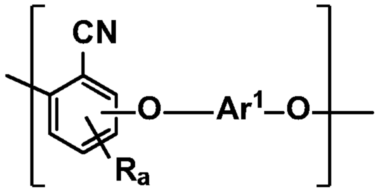 ...(II)

(In the formula, $Ar^1$ has one skeleton selected from units represented by formulae (a) to (e), and X is any of a hydrogen atom, a methyl group, and a trifluoromethyl group. R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, R may be equal to or different from each other, and a represents the number of substituents of R, and is an integer of 0 to 4.)

[Chem. 2]

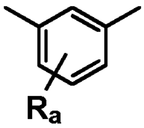 ...(a) 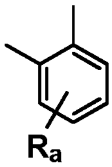 ...(b) 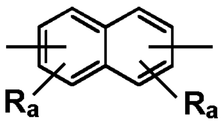 ...(c)

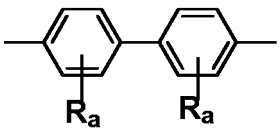 ...(d)

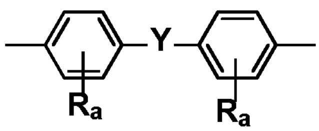 ...(e) Y= 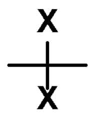 , 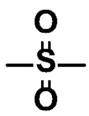 , 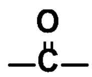 , —O—

2. The polyether nitrile film according to claim 1, wherein the polyether nitrile film has a melting point of 280 to 400°C.

3. The polyether nitrile film according to claim 1 or 2, wherein the polyether nitrile film has a crystal orientation degree of 50% or more.

4. The polyether nitrile film according to any one of claim 1 or 2, wherein the polyether nitrile film has a total light transmittance of 80% or more and a haze of 10% or less when the polyether nitrile film is 20 micrometers in thickness.

5. The polyether nitrile film according to claim 1 or 2, wherein the polyether nitrile film has a permittivity of 4.0 or less at a frequency of 5.8 GHz.

6. A method for producing a polyether nitrile film, the method comprising the following steps (1) and (2):

step (1) of melt-molding, at 310 to 400°C, a polyether nitrile that has N repeating units represented by a formula (I) and M repeating units represented by a formula (II), with N and M being integers that satisfy a relational expression of $0.80 \leq [N/(N + M)] < 1.00$; and
step (2) of cooling the molded body obtained in the step (1) to 180°C or lower.

[Chem. 3]

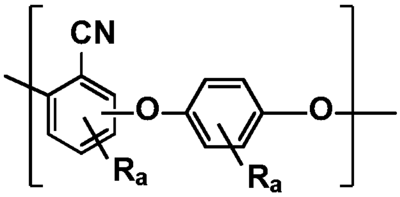 ...(I) 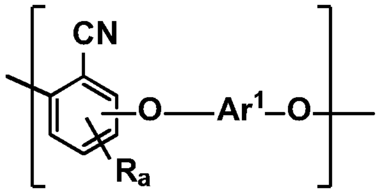 ...(II)

(In the formula, $Ar^1$ has one skeleton selected from units represented by formulae (a) to (e), and X is any of a hydrogen atom, a methyl group, and a trifluoromethyl group. R is any of a linear organic group having 1 to 6 carbon atoms, a branched organic group having 3 to 6 carbon atoms, and a cyclic organic group having 3 to 6 carbon atoms, and may contain one or more of oxygen atoms, nitrogen atoms, and sulfur atoms, R may be equal to or different from each other, and a represents the number of substituents of R, and is an integer of 0 to 4.)

[Chem. 4]

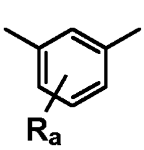 ...(a) 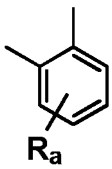 ...(b) 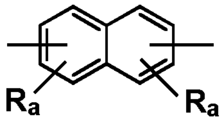 ...(c)

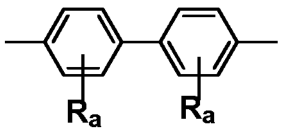 ...(d)

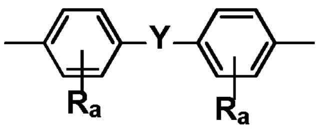 ...(e) 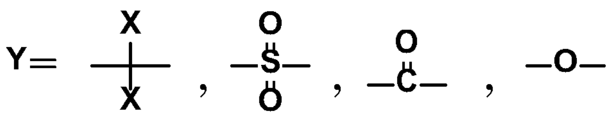

**7.** The method for producing a polyether nitrile film according to claim 6, the method further comprising the following steps (3) and (4):

step (3) of stretching the molded body obtained in step (2) at 180 to 250°C; and
step (4) of heating the molded body obtained in step (3) at 220 to 320°C.

**INTERNATIONAL SEARCH REPORT**

International application No.
**PCT/JP2023/004095**

**A. CLASSIFICATION OF SUBJECT MATTER**

***C08J 5/18***(2006.01)i; ***C08G 65/40***(2006.01)i
FI: C08J5/18 CEZ; C08G65/40

According to International Patent Classification (IPC) or to both national classification and IPC

**B. FIELDS SEARCHED**

Minimum documentation searched (classification system followed by classification symbols)

C08J5/00-5/02;5/12-5/22; B29C43/00-43/58; B29C48/00-48/96; B29C55/00-55/30; C08G65/00-67/04; B29L7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-064640 A (IDEMITSU MATERIAL KK) 08 March 1996 (1996-03-08)<br>entire text, in particular, claims, paragraphs [0004]-[0026], [0050]-[0060], [0069]-[0077] | 1-7 |
| A | WO 2021/241492 A1 (TORAY INDUSTRIES, INC.) 02 December 2021 (2021-12-02)<br>entire text, in particular, claims, paragraphs [0008]-[0013], [0038]-[0058] | 1-7 |
| A | JP 3-181519 A (IDEMITSU KOSAN CO LTD) 07 August 1991 (1991-08-07)<br>entire text | 1-7 |
| A | JP 2001-255751 A (CANON INC) 21 September 2001 (2001-09-21)<br>entire text | 1-7 |
| A | WO 2021/117814 A1 (IDEMITSU KOSAN CO LTD) 17 June 2021 (2021-06-17)<br>entire text | 1-7 |
| A | CN 112851996 A (UNIVERSITY OF ELECTRONIC SCIENCE AND TECHNOLOGY OF CHINA) 28 May 2021 (2021-05-28)<br>entire text | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/004095**

| Patent document cited in search report | Publication date (day/month/year) | Patent family member(s) | Publication date (day/month/year) |
|---|---|---|---|
| JP 8-064640 A | 08 March 1996 | (Family: none) | |
| WO 2021/241492 A1 | 02 December 2021 | (Family: none) | |
| JP 3-181519 A | 07 August 1991 | (Family: none) | |
| JP 2001-255751 A | 21 September 2001 | (Family: none) | |
| WO 2021/117814 A1 | 17 June 2021 | EP 4074748 A1<br>entire text<br>CN 114746476 A<br>TW 202132405 A | |
| CN 112851996 A | 28 May 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S61154923 A